(19) Europäisches Patentamt / European Patent Office / Office européen des brevets

(11) **EP 3 552 898 B1**

(12) **EUROPEAN PATENT SPECIFICATION**

(45) Date of publication and mention
of the grant of the patent:
**02.07.2025  Bulletin 2025/27**

(21) Application number: **18210401.8**

(22) Date of filing: **05.12.2018**

(51) International Patent Classification (IPC):
**B60W 30/18** *(2012.01)*     **B60W 50/10** *(2012.01)*
**B60W 30/14** *(2006.01)*     **G08G 1/16** *(2006.01)*
**B60W 50/00** *(2006.01)*

(52) Cooperative Patent Classification (CPC):
**B60W 30/18163; B60W 30/143; B60W 50/10;**
**G08G 1/167;** B60W 2050/0068; B60W 2554/80;
B60W 2554/801; B60W 2554/804; B60W 2720/106

(54) **APPARATUS AND METHOD FOR CONTROLLING LANE CHANGE IN VEHICLE**

VORRICHTUNG UND VERFAHREN ZUR STEUERUNG DES SPURWECHSELS IN EINEM
FAHRZEUG

APPAREIL ET PROCÉDÉ DE COMMANDE DE CHANGEMENT DE VOIE DANS UN VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **11.04.2018   US 201862655831 P
07.09.2018   KR 20180107268**

(43) Date of publication of application:
**16.10.2019   Bulletin 2019/42**

(73) Proprietors:
• **Hyundai Motor Company**
  **Seoul 06797 (KR)**
• **Kia Corporation**
  **Seocho-gu**
  **Seoul 06797 (KR)**

(72) Inventors:
• **Park, Sung Min**
  **18280 Gyeonggi-do (KR)**
• **Yang, Na Eun**
  **18280 Gyeonggi-do (KR)**
• **Jeong, Jin Su**
  **18280 Gyeonggi-do (KR)**

(74) Representative: **Hoffmann Eitle
Patent- und Rechtsanwälte PartmbB
Arabellastraße 30
81925 München (DE)**

(56) References cited:
EP-A1- 1 607 264          EP-A1- 3 239 960
DE-A1- 10 114 187          DE-A1- 19 821 122
US-A1- 2016 272 204

## Description

### FIELD

The present disclosure relates to an apparatus and method for adjusting a speed of a vehicle to control a lane change.

### BACKGROUND

The statements in this section merely provide background information related to the present disclosure and may not constitute prior art.

With the development of the auto industry, a lane change control system capable of automatically changing a lane on which a vehicle is traveling has been developed. When a driver operates a turn signal with the intention of changing a lane, the lane change control system may perform a lane change by automatically controlling a vehicle in a horizontal direction toward a direction where the turn signal is turned on. The lane change control system may perform a lane change by determining whether a speed, a location, and the like of a surrounding vehicle are suitable for performing the lane change, setting a control path for the lane change, and controlling steering torque along the control path. The lane change control system may detect a preceding vehicle and a following vehicle and may perform control based on the obtained information.

We have discovered that when a driving speed of a vehicle is slower, lane change control may put a driver in danger, and the driver may set a minimum operation speed capable of performing lane change control. In addition, when the minimum operation speed is set, while the vehicle travels at a speed slower than the minimum operation speed, when a lane change command of the driver is generated, we have discovered that a control strategy is desired to accelerate the vehicle to the minimum operation speed or more.

DE 101 14 187 A1 describes a method taking into account vehicles in the overtaking lane and regulating the vehicle to an increased overtaking speed if the traffic situation detected by sensors or a driver intervention causes a desire to overtake. Distances to vehicles in the overtaking lane are measured and the overtaking speed computed depending on the distances of the vehicle to be overtaken and at least the immediately preceding vehicle in the overtaking lane.

DE 198 21 122 A1 describes a method for regulating the speed and/or the distance of a first vehicle in relation to at least one preceding vehicle during a passing maneuver.

EP 1 607 264 A1 describes that a vehicle has a speed regulating system and a surroundings sensor system for detecting the traffic environment including the traffic on an adjacent lane, a decision device for deciding whether a desire to change lanes can be accommodated and a command device that outputs an acceleration command to the speed regulating signal in the event of a desire to change lanes. A detection device uses the data of the sensing arrangement for detecting a window for a safe entry to the adjacent lane and the command device computes an acceleration strategy including a time point for starting acceleration.

### SUMMARY

An aspect of the present invention provides an apparatus and method for controlling a lane change in a vehicle to provide a strategy for lane change control when a driving speed of the vehicle is lower than a minimum operation speed.

The technical problems to be solved by the present inventive concept are not limited to the aforementioned problems, and any other technical problems not mentioned herein will be clearly understood from the following description.

This object is accomplished by the subject-matter of the independent claims. The dependent claims concern particular embodiments.

Further areas of applicability will become apparent from the description provided herein. It should be understood that the description and specific examples are intended for purposes of illustration only and are not intended to limit the scope of the present invention, as defined by the appended claims.

### DRAWINGS

In order that the disclosure may be well understood, there will now be described various forms thereof, given by way of example, reference being made to the accompanying drawings, in which:

FIG. 1 is a block diagram illustrating a configuration of an apparatus for controlling a lane change in a vehicle;
FIG. 2 is a drawing illustrating an exemplary operation of an apparatus for controlling a lane change in a vehicle;
FIG. 3 is a drawing illustrating an exemplary operation of an apparatus for controlling a lane change in a vehicle;
FIG. 4 is a drawing illustrating an exemplary operation of an apparatus for controlling a lane change in a vehicle;

FIG. 5 is a drawing illustrating an exemplary operation of an apparatus for controlling a lane change in a vehicle;

FIG. 6 is a drawing illustrating an exemplary operation of an apparatus for controlling a lane change in a vehicle;

FIG. 7 is a drawing illustrating an exemplary operation of an apparatus for controlling a lane change in a vehicle;

FIG. 8 is a drawing illustrating an exemplary operation for determining a probability of collision in an apparatus for controlling a lane change in a vehicle;

FIG. 9 is a drawing illustrating an exemplary operation for determining a probability of collision in an apparatus for controlling a lane change in a vehicle;

FIG. 10 is a flowchart illustrating a method for controlling a lane change in a vehicle;

FIG. 11 is a flowchart illustrating a method for controlling a lane change in a vehicle; and

FIG. 12 is a block diagram illustrating a configuration of a computing system.

The drawings described herein are for illustration purposes only and are not intended to limit the scope of the present disclosure in any way.

## DETAILED DESCRIPTION

The following description is merely exemplary in nature and is not intended to limit the present disclosure, application, or uses. It should be understood that throughout the drawings, corresponding reference numerals indicate like or corresponding parts and features.

In addition, in describing an exemplary form of the present disclosure, if it is determined that a detailed description of related well-known configurations or functions blurs the gist of the present disclosure, it will be omitted.

In describing elements of forms of the present disclosure, the terms $1^{st}$, $2^{nd}$, first, second, A, B, (a), (b), and the like may be used herein. These terms are only used to distinguish one element from another element, but do not limit the corresponding elements irrespective of the nature, turn, or order of the corresponding elements. Unless otherwise defined, all terms used herein, including technical or scientific terms, have the same meanings as those generally understood by those skilled in the art to which the present disclosure pertains. Such terms as those defined in a generally used dictionary are to be interpreted as having meanings equal to the contextual meanings in the relevant field of art, and are not to be interpreted as having ideal or excessively formal meanings unless clearly defined as having such in the present application.

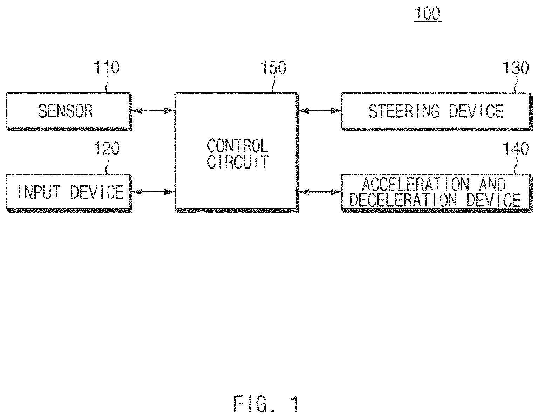

FIG. 1 is a block diagram illustrating a configuration of an apparatus for controlling a lane change in a vehicle in one form of the present disclosure.

Referring to FIG. 1, an apparatus 100 for controlling a lane change in a vehicle (hereinafter referred to as "apparatus 100" for convenience of description) may include a sensor 110, an input device 120, a steering device 130, an acceleration and deceleration device 140, and a control circuit 150. The apparatus 100 of FIG. 1 may be loaded into the vehicle.

The sensor 110 may be configured to sense an external vehicle. The sensor 110 may include, for example, a forward sensor 110 and a blind spot assist (BSA) sensor (or a rear lateral sensor) 110. The sensor 110 may sense a preceding vehicle which is traveling on the same lane as the vehicle and a following vehicle which is traveling on a lane adjacent to the vehicle.

The input device 120 may configured to receive a lane change command from a driver of the vehicle. The input device 120 may be implemented with, for example, a turn signal lever, a switch, a button, or the like capable of receiving an input of the driver.

The steering device 130 may be configured to control a steering angle of the vehicle. The steering device 130 may include, for example, a steering wheel, an actuator interlocked with the steering wheel, and a controller for controlling the actuator.

The acceleration and deceleration device 140 may be configured to control a speed of the vehicle. The acceleration and deceleration device 140 may include, for example, a throttle, a brake, an actuator interlocked with the throttle and the brake, and a controller for controlling the actuator.

The control circuit 150 may be electrically connected with the sensor 110, the input device 120, the steering device 130, and the acceleration and deceleration device 140. The control circuit 150 may control the sensor 110, the input device 120, the steering device 130, and the acceleration and deceleration device 140 and may perform a variety of data processing and various arithmetic operations. The control circuit 150 may be, for example, an electronic control unit (ECU) or a sub-controller loaded into the vehicle.

According to the invention, the control circuit 150 receives a lane change command using the input device 120. The control circuit 150 may receive a lane change command in a left or right direction via the input device 120 from the driver.

According to the invention, the control circuit 150 calculates a minimum operation speed for lane change control. For example, the control circuit 150 may calculate a minimum operation speed in response to receiving a lane change command or may calculate a minimum operation speed periodically while the vehicle travels. Upon lane change control, the apparatus 100 activates control only when a driving speed of the vehicle is greater than or equal to the minimum operation speed for a safe lane change. An exemplary equation for calculating a minimum operation speed $V_{smin}$ may be Equation 1 below.

[Equation 1]

$$V_{smin} = a * (t_B - t_G) + v_{app} - \sqrt{a^2 * (t_B - t_G)^2 - 2 * a * (v_{app} * t_G - S_{rear})}$$

According to Equation 1 above, the minimum operation speed $V_{smin}$ may be determined based on $S_{rear}$, $V_{app}$, a, $t_B$, and $t_G$. Herein, each of a, $t_B$, and $t_G$ may be a kind of environmental variable indicating a predicted behavior of a following vehicle and may correspond to a predefined constant. Each of the distance $S_{rear}$ between the vehicle and the following vehicle and the speed $V_{app}$ of the following vehicle may be a value indicating a motion state of the following vehicle and may be measured by the sensor 110.

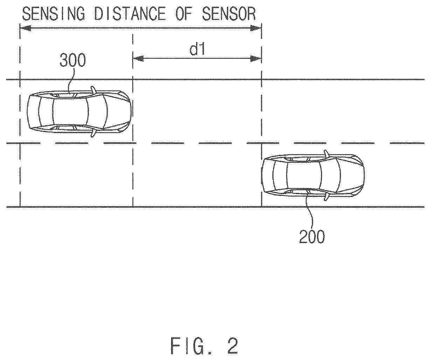

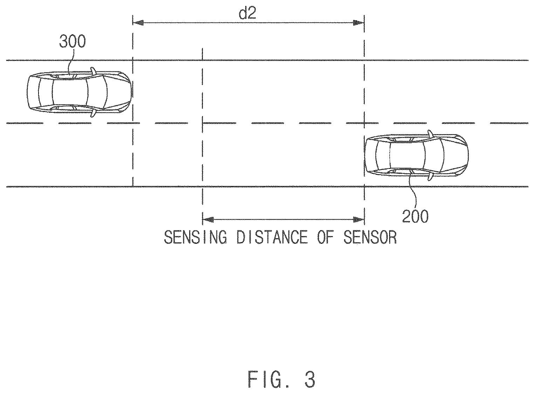

Herein, a sensing distance of the sensor 110 is limited, so there may be a need for calculating the minimum operation speed $V_{smin}$ for each of when the following vehicle is located within the sensing distance of the sensor 110 and when the following vehicle is not located within the sensing distance of the sensor 110. When the following vehicle is located within the sensing distance, the control circuit 150 may calculate the minimum distance $V_{smin}$ based on the distance $S_{rear}$ and the speed $V_{app}$ measured by the sensor 110. When the following vehicle is not located within the sensing distance, the control circuit 150 may calculate the minimum distance $V_{smin}$ assuming that there is the worst, that is, the following vehicle proceeds at a maximum legal speed immediately over the sensing distance of the sensor 110. In this case, the control circuit 150 sets the distance $S_{rear}$ to a maximum sensing distance of the sensor 110 and sets the speed $V_{app}$ to a maximum legal speed of a country where a vehicle is traveling. A description will be given in detail of an exemplary form of calculating the minimum operation speed with reference to FIGS. 2 and 3.

When a current speed of the vehicle is faster than the minimum operation speed, the control circuit 150 may immediately initiate lane change control. When the current speed of the vehicle is slower than the minimum operation speed, the control circuit 150 may provide various control strategies in consideration of a preceding vehicle.

According to an exemplary form, when a driving speed of the vehicle is lower than the minimum operation speed, the control circuit 150 may determine whether to accelerate the vehicle based on a speed of a preceding vehicle which is traveling on the same lane as the vehicle. In a situation where the vehicle should accelerate its driving speed to reach the minimum operation speed to activate lane change control, the control circuit 150 may divide a surrounding situation into four situations and may provide a control strategy suitable for each of the four situations. The control circuit 150 may suitably accelerate or decelerate the vehicle and may perform lane change control by controlling the steering device 130 and the acceleration and deceleration device 140.

[Table 1]

| Case | Control strategy |
|---|---|
| When there is no preceding vehicle | Accelerate the vehicle to $V_{smin}$ or more and perform lane change control |
| When speed $V_f$ of the preceding vehicle > $V_{smin}$ | Accelerate the vehicle to $V_{smin}$ or more and perform lane change control |
| When $V_f < V_{smin}$ and when there is no probability of collision | Accelerate the vehicle to $V_{smin}$ or more and perform lane change control |
| When $V_f < V_{smin}$ and when there is probability of collision | Decelerate the vehicle Retry lane change control after a distance from the preceding vehicle is sufficiently provided or after the following vehicle overtakes the vehicle |

First of all, the control circuit 150 may verify whether the minimum operation speed is higher than a driving speed of the vehicle. When the driving speed of the vehicle is higher than the minimum operation speed, the control circuit 150 may immediately initiate a lane change. When the driving speed of the vehicle is lower than the minimum operation speed, the control circuit 150 may perform lane change control depending on the control strategy disclosed in Table 1 above.

The control circuit 150 may verify whether there is a preceding vehicle using the sensor 110. When the preceding vehicle is not detected, the control circuit 150 may sufficiently accelerate the vehicle, thus accelerating the vehicle to the minimum operation speed or more to change a lane.

When the preceding vehicle is detected, the control circuit 150 may verify a speed of the preceding vehicle. When the speed of the preceding vehicle is higher than the minimum operation speed, since there is no collision risk although the control circuit 150 accelerates the vehicle, the control circuit 150 may accelerate the vehicle to the minimum operation speed or more and may change a lane.

When the speed of the preceding vehicle is lower than the minimum operation speed, the control circuit 150 may consider a speed of the preceding vehicle and a headway between the vehicle and the preceding vehicle. Since the headway is sufficiently long, when there is no probability of collision while the vehicle accelerates and changes a lane, the control circuit 150 may accelerates the vehicle to the minimum operation speed or more and may change a lane.

Since the headway is not sufficiently long, when there is a probability of collision while the vehicle accelerates and changes a lane, the control circuit 150 may decelerates the vehicle. After a following vehicle overtakes the vehicle or after a distance from the preceding vehicle is provided, the control circuit 150 may retry lane change control.

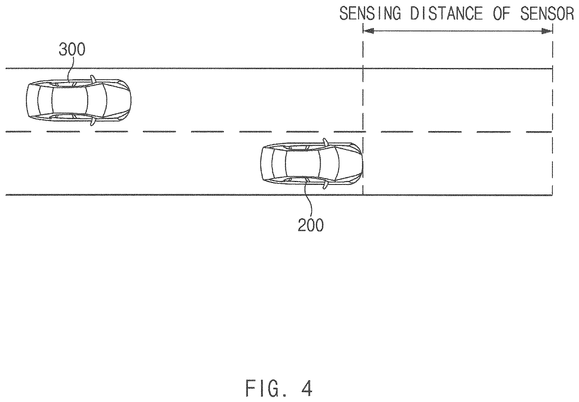

A description will be given in detail of each of the above-mentioned control strategies with reference to FIGS. 4 to 7.

Hereinafter, a description will be given in detail of an operation of calculating the minimum operation speed with reference to FIGS. 2 and 3.

FIG. 2 is a drawing illustrating an exemplary operation of an apparatus for controlling a lane change in a vehicle according to an exemplary form of the present disclosure.

Referring to FIG. 2, a vehicle 200 may include an apparatus 100 of FIG. 1. In a description of FIGS. 2 to 9, an operation described as being performed by the vehicle 200 may be understood as being controlled by a control circuit 150 of the apparatus 100.

In one form, when a following vehicle 300 which is traveling on a target lane corresponding to a lane change command is sensed by a sensor of the vehicle 200, the vehicle 200 may calculate a minimum operation speed based on a speed of the following vehicle 300 and a distance between the vehicle 200 and the following vehicle 300. For example, when a distance d1 between the vehicle 200 and the following vehicle 300 is shorter than a maximum sensing distance of a BSA sensor (or a rear lateral sensor), the vehicle 200 may measure a distance $S_{rear}$ and a speed $V_{app}$ using the sensor. The vehicle 200 may calculate a minimum operation speed for lane change control based on the measured $S_{rear}$ and $V_{app}$. For example, the vehicle 200 may calculate the minimum operation speed by applying the measured $S_{rear}$ and $V_{app}$ to Equation 1 above. When a lane change command is input, the vehicle 200 may calculate a minimum operation speed by detecting the following vehicle 300 in a lane to be changed or may calculate a minimum operation speed by detecting the following vehicle 3000 in a lane adjacent to the vehicle 200.

FIG. 3 is a drawing illustrating an exemplary operation of an apparatus for controlling a lane change in a vehicle according to another form of the present disclosure.

Referring to FIG. 3, when a following vehicle 300 which is traveling on a target lane corresponding to a lane change command is not sensed by a sensor of a vehicle 200 according to an exemplary form, the vehicle 200 may calculate a minimum operation speed based on a specified speed and a sensing distance of the sensor. For example, when a distance d2 between the vehicle 200 and the following vehicle 300 is longer than a maximum sensing distance of a BSA sensor (or a rear lateral sensor), the vehicle 200 may fail to measure a distance $S_{rear}$ and a speed $V_{app}$ using the sensor. In this case, the vehicle 200 calculates a minimum operation speed $V_{smin}$ assuming that the following vehicle 300 proceeds at a maximum legal speed immediately over a sensing distance of the sensor. The vehicle 200 sets the distance $S_{rear}$ to a maximum sensing distance of the sensor and sets the speed $V_{app}$ to a maximum legal speed of a country where the vehicle 200 is traveling. The vehicle 200 calculates a minimum operation speed by applying the set $S_{rear}$ and $V_{app}$ to Equation 1 above. When a lane change command is input, the vehicle 200 may calculate a minimum operation speed by detecting the following vehicle 300 in a lane to be changed or may calculate a minimum operation speed by detecting the following vehicle 300 in a lane adjacent to the vehicle 200.

Hereinafter, a description will be given in detail of a control strategy provided when a preceding vehicle is not detected, with reference to FIG. 4.

FIG. 4 is a drawing illustrating an exemplary operation of an apparatus for controlling a lane change in a vehicle according to one form of the present disclosure.

Referring to FIG. 4, when a preceding vehicle is not sensed by a sensor of a vehicle 200, the vehicle 200 may control a driving speed of the vehicle 200 to be higher than a minimum operation speed and may perform lane change control when the driving speed of the vehicle 200 is higher than the minimum operation speed. When the preceding vehicle is not located within a sensing distance of a forward sensor, the vehicle 200 may fail to detect the preceding vehicle. When the preceding vehicle is not located within the sensing distance of the sensor, since the vehicle 200 sufficiently accelerates its driving speed, it may accelerate the driving speed to a minimum operation speed and may change a lane.

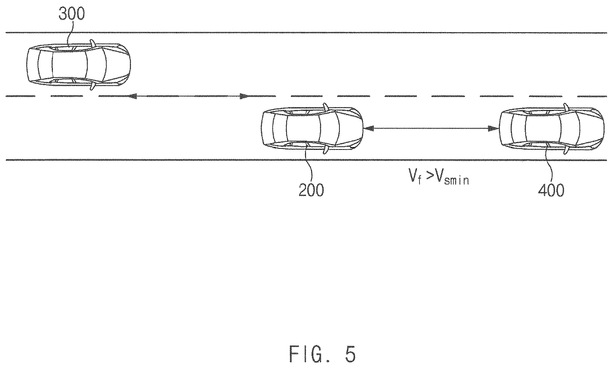

Hereinafter, a description will be given of a control strategy when a preceding vehicle is detected with reference to FIGS. 5 to 8.

FIG. 5 is a drawing illustrating an exemplary operation of an apparatus for controlling a lane change in a vehicle according to another exemplary form of the present disclosure.

Referring to FIG. 5, when a minimum operation speed $V_{smin}$ is lower than a speed $V_f$ of a preceding vehicle 400, a vehicle 200 may control its driving speed to be higher than the minimum operation speed $V_{smin}$ and may perform lane change control when the driving speed of the vehicle 200 is higher than the minimum operation speed $V_{smin}$. When the preceding vehicle 400 is located within a sensing distance of a forward sensor, the vehicle 200 may detect a speed of the preceding vehicle 400. When the speed $V_f$ of the preceding vehicle 400 is faster than the minimum operation speed $V_{smin}$, since the vehicle 200 sufficiently accelerates its driving speed, it may accelerate the driving speed to the minimum operation speed $V_{smin}$ and may change a lane.

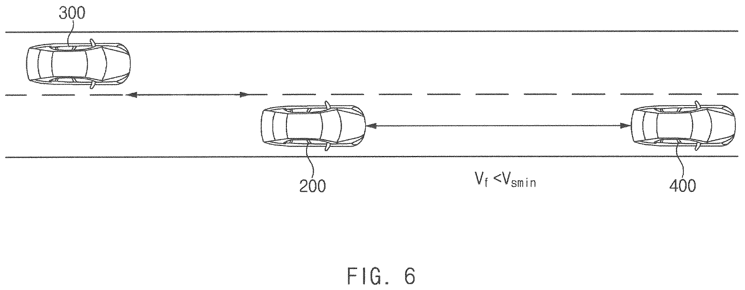

FIG. 6 is a drawing illustrating an exemplary operation of an apparatus for controlling a lane change in a vehicle according to another form of the present disclosure.

Referring to FIG. 6, when a minimum operation $V_{smin}$ is higher than a speed $V_f$ of a preceding vehicle 400, a vehicle 200 may determine whether to accelerate based on a speed of the preceding vehicle 400 and a distance between the vehicle 200 and the preceding vehicle 400. When the preceding vehicle 400 is located within a sensing distance of a forward sensor, the vehicle 200 may sense the speed $V_f$ of the preceding vehicle 400. When the speed $V_f$ of the preceding vehicle 400 is slower than the minimum operation speed $V_{smin}$, the vehicle 200 is unable to sufficiently accelerate its driving speed, so it may determine whether to accelerate in consideration of a headway between the vehicle 200 and the preceding vehicle 400.

According to an exemplary form, the vehicle 200 may determine a probability of collision between the vehicle 200 and the preceding vehicle 400 based on the speed $V_f$ of the preceding vehicle 400 and a distance between the vehicle 200 and the preceding vehicle 400. When there is no the probability of collision, the vehicle 200 may control its driving speed to be higher than the minimum operation speed $V_{smin}$ and may perform lane change control when the driving speed of the vehicle 200 is higher than the minimum operation speed $V_{smin}$. The vehicle 200 may predict a driving path of the vehicle 200 and a driving path of the preceding vehicle 400 until a lane change is completed. When there is no probability of collision with the preceding vehicle 400 since a headway is long as a result of the prediction, the vehicle 200 may accelerate its driving speed to the minimum operation speed $V_{smin}$ and may change a lane along the predicted driving speed.

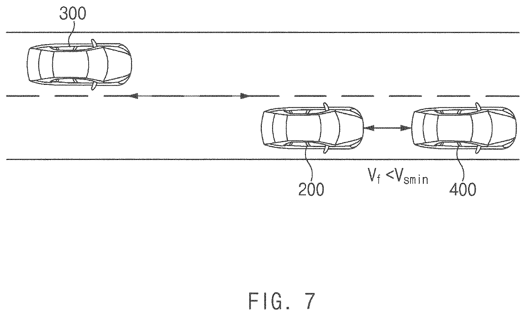

FIG. 7 is a drawing illustrating an exemplary operation of an apparatus for controlling a lane change in a vehicle according to another aspect of the present disclosure.

Referring to FIG. 7, a vehicle 200 may determine a probability of collision between the vehicle 200 and a preceding vehicle 400 based on a speed $V_f$ of the preceding vehicle 400 and a distance between the vehicle 200 and the preceding vehicle 400. When there is the probability of collision, the vehicle 200 may control its driving speed to decelerate. The vehicle 200 may predict its driving path and a driving path of the preceding vehicle 400 until a lane change is completed. When there is a probability of collision with the preceding vehicle 400 since a headway is short as a result of the prediction, the vehicle 200 may perform deceleration control. After the vehicle 200 decelerates, it may determine the probability of collision again and may calculate a minimum operation speed again. The vehicle 200 may provide a headway and may allow a following vehicle 300 to overtake the vehicle 200 by decelerating. After a headway is sufficiently provided or a minimum operation speed is reset after the following vehicle 300 overtakes the vehicle 200, the vehicle 200 may retry a lane change.

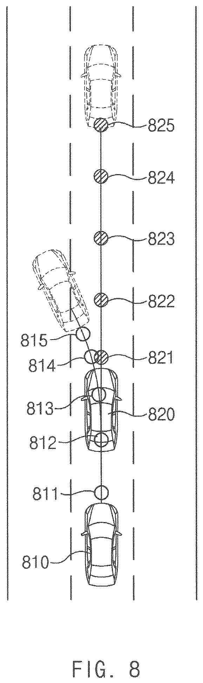

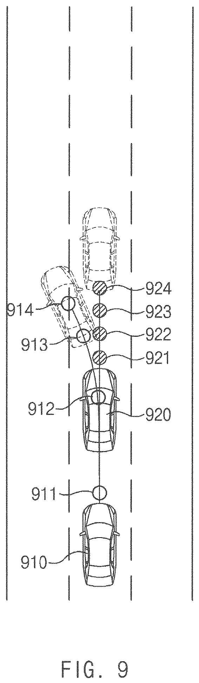

Hereinafter, a description will be given in detail of an operation of determining a probability of collision with reference to FIGS. 8 and 9.

FIGS. 8 and 9 are drawings illustrating an exemplary operation for determining a probability of collision in an apparatus for controlling a lane change in a vehicle according to an exemplary form of the present disclosure.

According to one form, a vehicle may estimate its predicted driving path and a predicted driving path of a preceding vehicle based on a speed of the preceding vehicle and a distance between the vehicle and the preceding vehicle and may determine a probability of collision between the vehicle and the preceding vehicle based on the predicted driving path of the vehicle and the predicted driving path of the preceding vehicle.

Referring to FIG. 8, a vehicle 810 may recognize a preceding vehicle 820, a driving lane, and a target lane. The vehicle 810 may predict a path where the vehicle 810 accelerates to a minimum operation speed and changes a lane and may predict a path of the preceding vehicle 820. The vehicle 810 may verify whether paths are duplicated. When the paths are duplicated, the vehicle 810 may determine that there is a probability of collision between the vehicle 810 and the preceding vehicle 820. When the paths are not duplicated, the vehicle 810 may determine that there is no probability of collision between the vehicle 810 and the preceding vehicle 820.

For example, a 1st point 811, a 2nd point 812, a 3rd point 813, a 4th point 814, and a 5th point 815 may represent expected movement points of the vehicle 810 at intervals of a specified time (e.g., 100 ms). A 6th point 821, a 7th point 822, an 8th point 823, a 9th point 824, and a 10th point 825 may represent expected movement points of the preceding vehicle 820 at intervals of the same time. The vehicle 810 may determine a probability of collision between the vehicle 810 and the preceding vehicle 820 in consideration of a location (e.g., the 1st point 811) of the vehicle 810 and a location (e.g., the 6th point 821) of the preceding vehicle 820 in the same time. In the case shown in FIG. 8, all of a distance between the 1st point 811 and the 6th point 821, a distance between the 2nd point 812 and the 7th distance 822, a distance between the 3rd point

813 and the $8^{th}$ point 823, a distance between the $4^{th}$ point 814 and the $9^{th}$ point 824, and a distance between the $5^{th}$ point 815 and the $10^{th}$ point 825 are sufficient, so the vehicle 810 may determine that there is no probability of collision between the vehicle 810 and the preceding vehicle 820.

Referring to FIG. 9, a $1^{st}$ point 911, a $2^{nd}$ point 912, a $3^{rd}$ point 913, and a $4^{th}$ point 914 may represent expected movement points of a vehicle 910 at intervals of a specified time (e.g., 100 ms). A $6^{th}$ point 921, a $7^{th}$ point 922, a $8^{th}$ point 923, and a $9^{th}$ point 924 may represent expected movement points of a preceding vehicle 920 at intervals of the same time. The vehicle 910 may determine a probability of collision between the vehicle 910 and the preceding vehicle 920 in consideration of a location (e.g., the $1^{st}$ point 911) of the vehicle 910 and a location (e.g., the $6^{th}$ point 921) of the preceding vehicle 920 in the same time. In the case shown in FIG. 9, a distance between the $3^{rd}$ point 913 and the $8^{th}$ point 923 is close to each other (is less than a specified value), so the vehicle 910 may determine that there is a probability of collision between the vehicle 910 and the preceding vehicle 920.

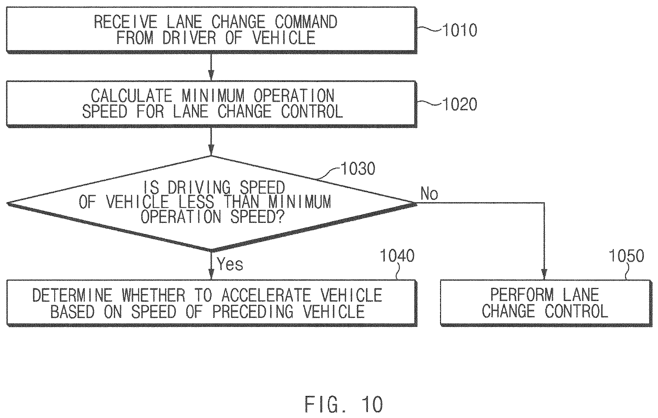

FIG. 10 is a flowchart illustrating a method for controlling a lane change in a vehicle according to an exemplary form of the present disclosure.

Hereinafter, it may be assumed that an apparatus 100 of FIG. 1 performs a process of FIG. 10. Furthermore, in a description of FIG. 10, an operation described as being performed by an apparatus may be understood as being controlled by a control circuit 150 of the apparatus 100.

Referring to FIG. 10, in operation 1010, the apparatus may receive a lane change command from a driver of a vehicle. For example, the apparatus may verify an intention for the driver to perform a lane change, through a turn signal lever, a button, a switch, or the like.

In operation 1020, the apparatus calculates a minimum operation speed for lane change control. For example, the apparatus may calculate a minimum operation speed based on a measurement value for a following vehicle when the following vehicle is detected or based on a setting value when the following vehicle is not detected.

In operation 1030, when receiving a lane change command, the apparatus may determine whether a driving speed of the vehicle is lower than the minimum operation speed. For example, the apparatus may compare the calculated minimum operation speed with a current speed of the vehicle.

When the driving speed of the vehicle is lower than the minimum operation speed, in operation 1040, the apparatus may determine whether to accelerate the vehicle based on a speed of a preceding vehicle. For example, the apparatus may determine whether to accelerate the vehicle based on a speed of the preceding vehicle, a distance between the vehicle and the preceding vehicle, and/or the like. The vehicle may change a lane after acceleration control or may retry lane change control after deceleration control.

When the driving speed of the vehicle is higher than the minimum operation speed, in operation 1050, the apparatus may perform lane change control. For example, when it is verified that the driving speed of the vehicle is higher than the minimum operation speed, the apparatus may immediately initiate lane change control.

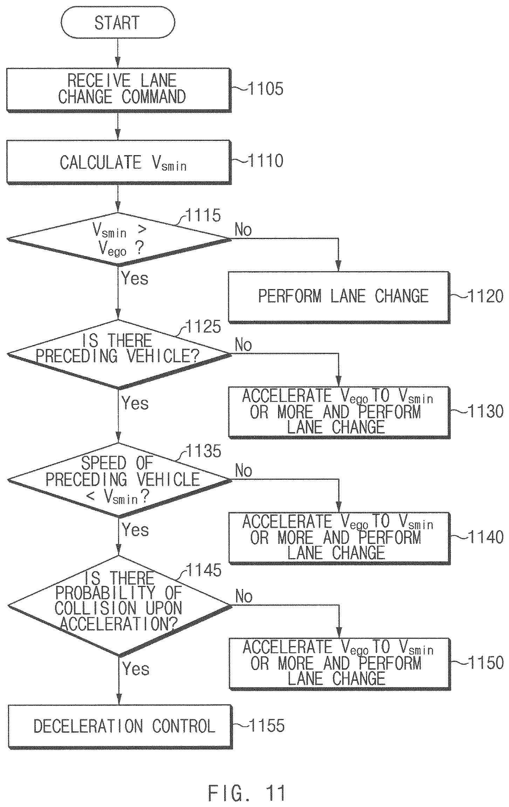

FIG. 11 is a flowchart illustrating a method for controlling a lane change in a vehicle according to an form of the present disclosure.

Hereinafter, it may be assumed that an apparatus 100 of FIG. 1 performs a process of FIG. 11. Furthermore, in a description of FIG. 11, an operation described as being performed by an apparatus may be understood as being controlled by a control circuit 150 of the apparatus 100.

Referring to FIG. 11, in operation 1105, the apparatus may receive a lane change command. In operation 1110, the apparatus may calculate a minimum operation sped $V_{smin}$ for lane change control. In operation 1115, the apparatus may determine whether the minimum operation speed $V_{smin}$ is greater than a driving speed $V_{ego}$ of a vehicle. When the minimum operation speed $V_{smin}$ is less than or equal to the driving speed $V_{ego}$ of the vehicle, in operation 1120, the apparatus may perform a lane change. When the minimum operation speed $V_{smin}$ is greater than the driving speed $V_{ego}$ of the vehicle, in operation 1125, the apparatus may determine whether there is a preceding vehicle.

When there is no the preceding vehicle, in operation 1130, the apparatus may accelerate the driving speed $V_{ego}$ of the vehicle to the minimum operation speed $V_{smin}$ or more and may change a lane. When there is the preceding vehicle, in operation 1135, the apparatus may determine whether a speed of the preceding vehicle is less than the minimum operation speed $V_{smin}$. When the speed of the preceding vehicle is greater than or equal to the minimum operation speed $V_{smin}$, in operation 1140, the apparatus may accelerate the driving speed $V_{ego}$ of the vehicle to the minimum operation speed $V_{smin}$ or more and may change the lane. When the speed of the preceding vehicle is less than the minimum operation speed $V_{smin}$, in operation 1145, the apparatus may determine a probability of collision between the vehicle and the preceding vehicle upon acceleration. When there is no the probability of collision between the vehicle and the preceding vehicle upon acceleration, in operation 1150, the apparatus may accelerate the driving speed $V_{ego}$ of the vehicle to the minimum operation speed $V_{smin}$ or more and may change the lane. When there is the probability of collision between the vehicle and the preceding vehicle upon acceleration, in operation 1155, the apparatus may perform deceleration control.

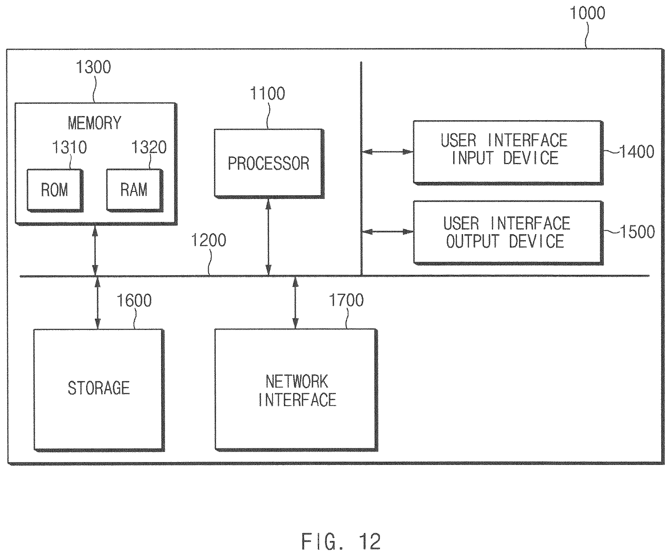

FIG. 12 is a block diagram illustrating a configuration of a computing system according to an form of the present disclosure.

Referring to FIG. 12, a computing system 1000 may include at least one processor 1100, a memory 1300, a user interface input device 1400, a user interface output device 1500, a storage 1600, and a network interface 1700, which are connected with each other via a bus 1200.

The processor 1100 may be a central processing unit (CPU) or a semiconductor device for performing processing of instructions stored in the memory 1300 and/or the storage 1600. Each of the memory 1300 and the storage 1600 may include various types of volatile or non-volatile storage media. For example, the memory 1300 may include a read only memory (ROM) and a random access memory (RAM).

Thus, the operations of the methods or algorithms described in connection with the forms disclosed in the specification may be directly implemented with a hardware module, a software module, or combinations thereof, executed by the processor 1100. The software module may reside on a storage medium (i.e., the memory 1300 and/or the storage 1600) such as a RAM, a flash memory, a ROM, an erasable and programmable ROM (EPROM), an electrically EPROM (EEPROM), a register, a hard disc, a removable disc, or a compact disc-ROM (CD-ROM). An exemplary storage medium may be coupled to the processor 1100. The processor 1100 may read out information from the storage medium and may write information in the storage medium. Alternatively, the storage medium may be integrated with the processor 1100. The processor and storage medium may reside in an application specific integrated circuit (ASIC). The ASIC may reside in a user terminal. Alternatively, the processor and storage medium may reside as a separate component of the user terminal.

The apparatus according to an exemplary form of the present disclosure may enhance the convenience of a driver and may provide safety of lane change control by determining whether to accelerate a vehicle in consideration of a speed, a location, and the like of a preceding vehicle when a driving speed of the vehicle is lower than a minimum operation speed.

In addition, various effects directly or indirectly ascertained through the present disclosure may be provided.

Hereinabove, although the present disclosure has been described with reference to exemplary forms and the accompanying drawings, the present disclosure is not limited thereto, but may be variously modified and altered by those skilled in the art according to the appended claims.

## Claims

1. An apparatus (100) for controlling a lane change of a vehicle (200), the apparatus comprising:

   a sensor (110) configured to sense an external vehicle (300, 400);
   an input device (120) configured to receive a lane change command from a driver of the vehicle; and
   a control circuit (150) configured to be electrically connected with the sensor and the input device,
   wherein the control circuit (150) is configured to:

   receive the lane change command using the input device;
   calculate a minimum operation speed of the vehicle for a lane change control;
   determine whether to accelerate the vehicle based on a speed of a preceding vehicle (400) traveling on the same lane as the vehicle, when a driving speed of the vehicle is lower than the minimum operation speed; and

   activate lane change control only when the driving speed of the vehicle is greater than or equal to the minimum operation speed,
   **characterized in that** the control circuit (150) is configured to:

   when a following vehicle (300) traveling on a target lane corresponding to the lane change command is not sensed by the sensor, set a distance between the vehicle (200) and the following vehicle (300) to a maximum distance sensible by the sensor and a speed of following vehicle (300) to a maximum legal speed of a country where the vehicle (200) is traveling, and
   calculate the minimum operation speed based on the distance and the speed set by the control circuit (150).

2. The apparatus (100) according to claim 1, wherein the control circuit (150) is configured to:
   calculate the minimum operation speed of the vehicle in response to receiving the lane change command.

3. The apparatus (100) according to claim 1, wherein the control circuit (150) is configured to:
   calculate the minimum operation speed of the vehicle periodically while the vehicle travels.

4. The apparatus (100) according to claim 1, wherein the control circuit (150) is configured to:
   when a following vehicle traveling on a target lane corresponding to the lane change command is sensed by the sensor, calculate the minimum operation speed based on a speed of the following vehicle and a distance between the vehicle and the following vehicle.

5. The apparatus (100) according to claim 1, wherein the control circuit (150) is configured to:

control the vehicle such that the driving speed of the vehicle is higher than the minimum operation speed, when the minimum operation speed is lower than the speed of the preceding vehicle; and
perform the lane change control.

6. The apparatus (100) according to claim 1, wherein the control circuit (150) is configured to:

control the vehicle such that the driving speed of the vehicle is higher than the minimum operation speed, when the preceding vehicle is not sensed by the sensor; and
perform the lane change control.

7. The apparatus (100) according to claim 1, wherein the control circuit (150) is configured to:
determine whether to accelerate the vehicle based on the speed of the preceding vehicle and a distance between the vehicle and the preceding vehicle, when the minimum operation speed is higher than the speed of the preceding vehicle.

8. The apparatus (100) according to claim 7, wherein the control circuit (150) is configured to:

determine a probability of collision between the vehicle and the preceding vehicle based on the speed of the preceding vehicle and the distance between the vehicle and the preceding vehicle;
control the vehicle such that the driving speed of the vehicle is higher than the minimum operation speed, when there is no the probability of collision; and
perform the lane change control.

9. The apparatus (100) according to claim 8, wherein the control circuit (150) is configured to:

estimate a predicted driving path of the vehicle and a predicted driving path of the preceding vehicle based on the speed of the preceding vehicle and the distance between the vehicle and the preceding vehicle; and
determine the probability of collision between the vehicle and the preceding vehicle based on the predicted driving path of the vehicle and the predicted driving path of the preceding vehicle.

10. The apparatus (100) according to claim 7, wherein the control circuit (150) is configured to:

determine a probability of collision between the vehicle and the preceding vehicle based on the speed of the preceding vehicle and the distance between the vehicle and the preceding vehicle; and
control the vehicle to decelerate, when there is the probability of collision.

11. The apparatus (100) according to claim 10, wherein the control circuit (150) is configured to:
determine the probability of collision, after the vehicle decelerates.

12. The apparatus (100) according to claim 10, wherein the control circuit (150) is configured to:
calculate the minimum operation speed again, after the vehicle decelerates.

13. A method for controlling a lane change in a vehicle, the method comprising:

Receiving (910), by a control circuit, a lane change command from a driver of the vehicle;
Calculating (920), by the control circuit, a minimum operation speed of the vehicle for a lane change control;
Determining (930), by the control circuit, whether to accelerate the vehicle based on a speed of a preceding vehicle traveling on the same lane as the vehicle, when a driving speed of the vehicle is lower than the minimum operation speed;
Activate lane change control (950) only when the driving speed of the vehicle is greater than or equal to the minimum operation speed,
**characterized in that** the method further comprises:

Setting, by the control circuit (150), a distance between the vehicle (200) and the following vehicle (300) to a maximum distance sensible by the sensor and a speed of following vehicle (300) to a maximum legal speed of a country where the vehicle (200) is traveling, when a following vehicle (300) traveling on a target lane corresponding to the lane change command is not sensed by the sensor, and

Calculating, by the control unit (150), the minimum operation speed based on the distance and the speed set by the control unit (150).

14. The method according to claim 13, wherein calculating the minimum operation speed comprises:

when a following vehicle traveling on a target lane corresponding to the lane change command is sensed, calculating the minimum operation speed based on a speed of the following vehicle and a distance between the vehicle and the following vehicle.

**Patentansprüche**

1. Vorrichtung (100) zur Steuerung eines Spurwechsels eines Fahrzeugs (200), wobei die Vorrichtung Folgendes umfasst:

einen Sensor (110), der konfiguriert ist, um ein externes Fahrzeug (300, 400) zu erfassen;

eine Eingabevorrichtung (120), die konfiguriert ist, um einen Spurwechselbefehl von einem Fahrer des Fahrzeugs zu empfangen; und

eine Steuerschaltung (150), die konfiguriert ist, um elektrisch mit dem Sensor und der Eingabevorrichtung verbunden zu werden,

wobei die Steuerschaltung (150) konfiguriert ist zum:

Empfangen des Spurwechselbefehls unter Verwendung der Eingabevorrichtung;

Berechnen einer minimale Betriebsgeschwindigkeit des Fahrzeugs für eine Spurwechselsteuerung;

Bestimmen, ob das Fahrzeug beschleunigt werden soll, basierend auf einer Geschwindigkeit eines vorausfahrenden Fahrzeugs (400), das auf der gleichen Fahrspur wie das Fahrzeug fährt, wenn eine Fahrgeschwindigkeit des Fahrzeugs niedriger als die minimale Betriebsgeschwindigkeit ist; und

Aktivieren der Spurwechselsteuerung nur, wenn die Fahrgeschwindigkeit des Fahrzeugs größer oder gleich der minimalen Betriebsgeschwindigkeit ist,

**dadurch gekennzeichnet, dass** die Steuerschaltung (150) konfiguriert ist zum:

wenn ein nachfolgendes Fahrzeug (300), das auf einer Zielfahrspur fährt, die dem Spurwechselbefehl entspricht, nicht von dem Sensor erfasst wird, Einstellen eines Abstands zwischen dem Fahrzeug (200) und dem nachfolgenden Fahrzeug (300) auf einen maximalen Abstand, der von dem Sensor erfasst wird, und einer Geschwindigkeit des nachfolgenden Fahrzeugs (300) auf eine gesetzliche Höchstgeschwindigkeit eines Landes, in dem das Fahrzeug (200) fährt, und

Berechnen der minimalen Betriebsgeschwindigkeit basierend auf dem Abstand und der von der Steuerschaltung (150) eingestellten Geschwindigkeit.

2. Vorrichtung (100) nach Anspruch 1, wobei die Steuerschaltung (150) konfiguriert ist zum:
Berechnen der minimale Betriebsgeschwindigkeit des Fahrzeugs als Antwort auf das Empfangen des Spurwechselbefehls.

3. Vorrichtung (100) nach Anspruch 1, wobei die Steuerschaltung (150) konfiguriert ist zum:
periodischen Berechnen der minimalen Betriebsgeschwindigkeit des Fahrzeugs, während das Fahrzeug fährt.

4. Vorrichtung (100) nach Anspruch 1, wobei die Steuerschaltung (150) konfiguriert ist zum:
wenn ein nachfolgendes Fahrzeug, das auf einer dem Spurwechselbefehl entsprechenden Zielfahrspur fährt, von dem Sensor erfasst wird, Berechnen der minimalen Betriebsgeschwindigkeit basierend auf einer Geschwindigkeit des nachfolgenden Fahrzeugs und einem Abstand zwischen dem Fahrzeug und dem nachfolgenden Fahrzeug.

5. Vorrichtung (100) nach Anspruch 1, wobei die Steuerschaltung (150) konfiguriert ist zum:

Steuern des Fahrzeugs, sodass die Fahrgeschwindigkeit des Fahrzeugs höher ist als die minimale Betriebsgeschwindigkeit, wenn die minimale Betriebsgeschwindigkeit niedriger ist als die Geschwindigkeit des vorausfahrenden Fahrzeugs; und
Durchführen der Spurwechselsteuerung.

6. Vorrichtung (100) nach Anspruch 1, wobei die Steuerschaltung (150) konfiguriert ist zum:

Steuern des Fahrzeugs, sodass die Fahrgeschwindigkeit des Fahrzeugs höher ist als die minimale Betriebsgeschwindigkeit, wenn das vorausfahrende Fahrzeug nicht von dem Sensor erfasst wird; und
Durchführen der Spurwechselsteuerung.

7. Vorrichtung (100) nach Anspruch 1, wobei die Steuerschaltung (150) konfiguriert ist zum:
Bestimmen, ob das Fahrzeug beschleunigt werden soll, basierend auf der Geschwindigkeit des vorausfahrenden Fahrzeugs und einem Abstand zwischen dem Fahrzeug und dem vorausfahrenden Fahrzeug zu bestimmen, wenn die minimale Betriebsgeschwindigkeit höher ist als die Geschwindigkeit des vorausfahrenden Fahrzeugs.

8. Vorrichtung (100) nach Anspruch 7, wobei die Steuerschaltung (150) konfiguriert ist zum:

Bestimmen einer Kollisionswahrscheinlichkeit zwischen dem Fahrzeug und dem vorausfahrenden Fahrzeug basierend auf der Geschwindigkeit des vorausfahrenden Fahrzeugs und dem Abstand zwischen dem Fahrzeug und dem vorausfahrenden Fahrzeug;
Steuern des Fahrzeugs, sodass die Fahrgeschwindigkeit des Fahrzeugs höher ist als die minimale Betriebsgeschwindigkeit, wenn keine Kollisionswahrscheinlichkeit besteht; und
Durchführen der Spurwechselsteuerung.

9. Vorrichtung (100) nach Anspruch 8, wobei die Steuerschaltung (150) konfiguriert ist zum:

Schätzen eines vorhergesagten Fahrpfads des Fahrzeugs und eines vorhergesagten Fahrpfads des vorausfahrenden Fahrzeugs basierend auf der Geschwindigkeit des vorausfahrenden Fahrzeugs und dem Abstand zwischen dem Fahrzeug und dem vorausfahrenden Fahrzeug; und
Bestimmen der Kollisionswahrscheinlichkeit zwischen dem Fahrzeug und dem vorausfahrenden Fahrzeug basierend auf dem vorhergesagten Fahrpfad des Fahrzeugs und dem vorhergesagten Fahrpfad des vorausfahrenden Fahrzeugs.

10. Vorrichtung (100) nach Anspruch 7, wobei die Steuerschaltung (150) konfiguriert ist zum:

Bestimmen einer Kollisionswahrscheinlichkeit zwischen dem Fahrzeug und dem vorausfahrenden Fahrzeug basierend auf der Geschwindigkeit des vorausfahrenden Fahrzeugs und dem Abstand zwischen dem Fahrzeug und dem vorausfahrenden Fahrzeug; und
Steuern des Fahrzeugs, sodass es abbremst, wenn die Kollisionswahrscheinlichkeit besteht.

11. Vorrichtung (100) nach Anspruch 10, wobei die Steuerschaltung (150) konfiguriert ist zum:
die Kollisionswahrscheinlichkeit zu bestimmen, nachdem das Fahrzeug abgebremst hat.

12. Vorrichtung (100) nach Anspruch 10, wobei die Steuerschaltung (150) konfiguriert ist zum:
erneuten Berechnen der minimalen Betriebsgeschwindigkeit, nachdem das Fahrzeug abgebremst hat.

13. Verfahren zum Steurung eines Spurwechsels bei einem Fahrzeug, wobei das Verfahren Folgendes umfasst:

Empfangen (910), durch eine Steuerschaltung, eines Spurwechselbefehls von einem Fahrer des Fahrzeugs;
Berechnen (920), durch die Steuerschaltung, einer minimalen Betriebsgeschwindigkeit des Fahrzeugs für eine Spurwechselsteuerung;
Bestimmen (930), durch die Steuerschaltung, ob das Fahrzeug basierend auf einer Geschwindigkeit eines vorausfahrenden Fahrzeugs, das auf der gleichen Fahrspur wie das Fahrzeug fährt, beschleunigt werden soll, wenn eine Fahrgeschwindigkeit des Fahrzeugs niedriger als die minimale Betriebsgeschwindigkeit ist;
Aktivieren der Spurwechselsteuerung (950) nur dann, wenn die Fahrgeschwindigkeit des Fahrzeugs größer oder gleich der minimalen Betriebsgeschwindigkeit ist,
**dadurch gekennzeichnet, dass** das Verfahren weiter Folgendes umfasst:

Einstellen, durch die Steuerschaltung (150), eines Abstands zwischen dem Fahrzeug (200) und dem nachfolgenden Fahrzeug (300) auf einen vom Sensor erfassten maximalen Abstand und einer Geschwindigkeit des nachfolgenden Fahrzeugs (300) auf eine gesetzliche Höchstgeschwindigkeit eines Landes, in dem das Fahrzeug (200) fährt, wenn ein nachfolgendes Fahrzeug (300), das auf einer dem Spurwechselbefehl entsprechenden Zielfahrspur fährt, nicht vom Sensor erfasst wird, und

Berechnen, durch die Steuerschaltung (150), der minimalen Betriebsgeschwindigkeit basierend auf dem Abstand und der durch die Steuerschaltung (150) eingestellten Geschwindigkeit.

**14.** Verfahren nach Anspruch 13, wobei Berechnen der minimalen Betriebsgeschwindigkeit Folgendes umfasst: wenn ein nachfolgendes Fahrzeug, das auf einer dem Spurwechselbefehl entsprechenden Zielfahrspur fährt, erfasst wird, Berechnen der minimalen Betriebsgeschwindigkeit basierend auf einer Geschwindigkeit des nachfolgenden Fahrzeugs und einem Abstand zwischen dem Fahrzeug und dem nachfolgenden Fahrzeug.

**Revendications**

**1.** Appareil (100) de commande de changement de voie d'un véhicule (200), l'appareil comprenant :

un capteur (110) configuré pour détecter un véhicule externe (300, 400) ;
un dispositif (120) d'entrée configuré pour recevoir une instruction de changement de voie émanant d'un conducteur du véhicule ; et
un circuit (150) de commande configuré pour être connecté électriquement au capteur et au dispositif d'entrée, dans lequel le circuit (150) de commande est configuré pour :

recevoir l'instruction de changement de voie à l'aide du dispositif d'entrée ;
calculer une vitesse de fonctionnement minimale du véhicule pour une commande de changement de voie ;
déterminer s'il faut accélérer le véhicule sur la base d'une vitesse d'un véhicule (400) précédent circulant sur la même voie que le véhicule, lorsqu'une vitesse de conduite du véhicule est inférieure à la vitesse de fonctionnement minimale ; et

activer la commande de changement de voie uniquement lorsque la vitesse de conduite du véhicule est supérieure ou égale à la vitesse de fonctionnement minimale,
**caractérisé en ce que** le circuit (150) de commande est configuré pour :

lorsqu'un véhicule (300) suivant circulant sur une voie cible correspondant à l'instruction de changement de voie n'est pas détecté par le capteur, régler une distance entre le véhicule (200) et le véhicule (300) suivant à une distance maximale pouvant être détectée par le capteur et une vitesse du véhicule (300) suivant à une vitesse légale maximale d'un pays où circule le véhicule (200), et
calculer la vitesse de fonctionnement minimale sur la base de la distance et de la vitesse réglées par le circuit (150) de commande.

**2.** Appareil (100) selon la revendication 1, dans lequel le circuit (150) de commande est configuré pour : calculer la vitesse de fonctionnement minimale du véhicule en réponse à la réception de l'instruction de changement de voie.

**3.** Appareil (100) selon la revendication 1, dans lequel le circuit (150) de commande est configuré pour : calculer périodiquement la vitesse de fonctionnement minimale du véhicule pendant que le véhicule circule.

**4.** Appareil (100) selon la revendication 1, dans lequel le circuit (150) de commande est configuré pour : lorsqu'un véhicule suivant circulant sur une voie cible correspondant à l'instruction de changement de voie est détecté par le capteur, calculer la vitesse de fonctionnement minimale sur la base d'une vitesse du véhicule suivant et d'une distance entre le véhicule et le véhicule suivant.

**5.** Appareil (100) selon la revendication 1, dans lequel le circuit (150) de commande est configuré pour :

commander le véhicule de sorte que la vitesse de conduite du véhicule soit supérieure à la vitesse de fonctionnement minimale, lorsque la vitesse de fonctionnement minimale est inférieure à la vitesse du véhicule précédent ; et

effectuer la commande de changement de voie.

6. Appareil (100) selon la revendication 1, dans lequel le circuit (150) de commande est configuré pour :

commander le véhicule de sorte que la vitesse de conduite du véhicule soit supérieure à la vitesse de fonctionnement minimale, lorsque le véhicule précédent n'est pas détecté par le capteur ; et effectuer la commande de changement de voie.

7. Appareil (100) selon la revendication 1, dans lequel le circuit (150) de commande est configuré pour :
déterminer s'il faut accélérer le véhicule sur la base de la vitesse du véhicule précédent et d'une distance entre le véhicule et le véhicule précédent, lorsque la vitesse de fonctionnement minimale est supérieure à la vitesse du véhicule précédent.

8. Appareil (100) selon la revendication 7, dans lequel le circuit (150) de commande est configuré pour :

déterminer une probabilité de collision entre le véhicule et le véhicule précédent sur la base de la vitesse du véhicule précédent et de la distance entre le véhicule et le véhicule précédent ; commander le véhicule de sorte que la vitesse de conduite du véhicule soit supérieure à la vitesse de fonctionnement minimale, lorsqu'il n'y a pas de probabilité de collision ; et effectuer la commande de changement de voie.

9. Appareil (100) selon la revendication 8, dans lequel le circuit (150) de commande est configuré pour :

estimer une trajectoire de conduite prévue du véhicule et une trajectoire de conduite prévue du véhicule précédent sur la base de la vitesse du véhicule précédent et de la distance entre le véhicule et le véhicule précédent ; et déterminer la probabilité de collision entre le véhicule et le véhicule précédent sur la base de la trajectoire de conduite prévue du véhicule et de la trajectoire de conduite prévue du véhicule précédent.

10. Appareil (100) selon la revendication 7, dans lequel le circuit (150) de commande est configuré pour :

déterminer une probabilité de collision entre le véhicule et le véhicule précédent sur la base de la vitesse du véhicule précédent et de la distance entre le véhicule et le véhicule précédent ; et commander une décélération du véhicule quand il y a une probabilité de collision.

11. Appareil (100) selon la revendication 10, dans lequel le circuit (150) de commande est configuré pour :
déterminer la probabilité de collision, après la décélération du véhicule.

12. Appareil (100) selon la revendication 10, dans lequel le circuit (150) de commande est configuré pour :
recalculer la vitesse de fonctionnement minimale, après la décélération du véhicule.

13. Procédé de commande d'un changement de voie dans un véhicule, le procédé comprenant :

une réception (910), par un circuit de commande, d'une instruction de changement de voie émanant d'un conducteur du véhicule ; un calcul (920), par le circuit de commande, d'une vitesse de fonctionnement minimale du véhicule pour une commande de changement de voie ; le fait de déterminer (930), par le circuit de commande, s'il faut accélérer le véhicule sur la base d'une vitesse d'un véhicule précédent circulant sur la même voie que le véhicule, lorsqu'une vitesse de conduite du véhicule est inférieure à la vitesse de fonctionnement minimale ; une activation de la commande de changement de voie (950) uniquement lorsque la vitesse de conduite du véhicule est supérieure ou égale à la vitesse de fonctionnement minimale, **caractérisé en ce que** le procédé comprend en outre :

un réglage, par le circuit (150) de commande, d'une distance entre le véhicule (200) et le véhicule (300) suivant à une distance maximale pouvant être détectée par le capteur et d'une vitesse du véhicule (300) suivant à une vitesse légale maximale d'un pays où circule le véhicule (200), lorsqu'un véhicule (300) suivant circulant sur une voie cible correspondant à l'instruction de changement de voie n'est pas détecté par le

13

capteur, et
un calcul, par l'unité (150) de commande, de la vitesse de fonctionnement minimale sur la base de la distance et de la vitesse réglées par l'unité (150) de commande.

14. Procédé selon la revendication 13, dans lequel le calcul de la vitesse de fonctionnement minimale comprend :
lorsqu'un véhicule suivant circulant sur une voie cible correspondant à l'instruction de changement de voie est détecté, un calcul de la vitesse de fonctionnement minimale sur la base d'une vitesse du véhicule suivant et d'une distance entre le véhicule et le véhicule suivant.

<u>100</u>

110       150       130

| SENSOR | ←→ | CONTROL CIRCUIT | ←→ | STEERING DEVICE |

120                 140

| INPUT DEVICE | ←→ | | ←→ | ACCELERATION AND DECELERATION DEVICE |

FIG. 1

FIG. 2

FIG. 3

d2

300

200

SENSING DISTANCE OF SENSOR

FIG. 4

FIG. 5

FIG. 6

$V_f < V_{smin}$

FIG. 7

FIG. 8

FIG. 9

```
┌─────────────────────────────────┐
│   RECEIVE LANE CHANGE COMMAND    │──1010
│      FROM DRIVER OF VEHICLE      │
└─────────────────────────────────┘
                 │
                 ▼
┌─────────────────────────────────┐
│   CALCULATE MINIMUM OPERATION    │──1020
│    SPEED FOR LANE CHANGE CONTROL │
└─────────────────────────────────┘
                 │
                 ▼
           ╱─────────╲  ──1030
         ╱  IS DRIVING  ╲
       ╱  SPEED OF VEHICLE ╲   No
      ⟨ LESS THAN MINIMUM   ⟩──────────┐
       ╲ OPERATION SPEED?  ╱           │
         ╲               ╱             │
           ╲───────────╱               │
                 │ Yes                 │
                 ▼  1040               ▼  1050
┌─────────────────────────────┐  ┌──────────────────┐
│ DETERMINE WHETHER TO         │  │  PERFORM LANE    │
│ ACCELERATE VEHICLE BASED ON  │  │  CHANGE CONTROL  │
│ SPEED OF PRECEDING VEHICLE   │  │                  │
└─────────────────────────────┘  └──────────────────┘
```

FIG. 10

START

RECEIVE LANE
CHANGE COMMAND ~1105

CALCULATE $V_{smin}$ ~1110

1115
$V_{smin} > V_{ego}$ ? —No→ PERFORM LANE CHANGE ~1120

Yes

1125
IS THERE PRECEDING VEHICLE? —No→ ACCELERATE $V_{ego}$ TO $V_{smin}$ OR MORE AND PERFORM LANE CHANGE ~1130

Yes

1135
SPEED OF PRECEDING VEHICLE $< V_{smin}$ ? —No→ ACCELERATE $V_{ego}$ TO $V_{smin}$ OR MORE AND PERFORM LANE CHANGE ~1140

Yes

1145
IS THERE PROBABILITY OF COLLISION UPON ACCELERATION? —No→ ACCELERATE $V_{ego}$ TO $V_{smin}$ OR MORE AND PERFORM LANE CHANGE ~1150

Yes

DECELERATION CONTROL ~1155

FIG. 11

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10114187 A1
- DE 19821122 A1
- EP 1607264 A1